# EUROPEAN PATENT SPECIFICATION

(11) **EP 1 534 475 B1**
(45) Date of publication and mention of the grant of the patent: **05.11.2008**
(21) Application number: 03771177.7
(22) Date of filing: 25.07.2003
(51) Int. Cl.: B26B 7/00, B23D 49/16, B26D 7/08

(54) **Glazing panel cut-out tool**
Ausschneidvorrichtung für Glasscheiben
Outil pour le découpage d'une vitre

(30) Priority: 25.07.2002 GB 0217215
(43) Date of publication of application: 01.06.2005
(73) Proprietor: Belron Hungary Kft- Zug branch, 6304 Zug (CH)
(72) Inventor: DAVIES, Christopher, Ty Coch Farm,Pembrey Road, Carmarthenshire SA17 4TF (GB); MIVAL, Nicholas, James, Top Floor, London W2 2HH (GB)
(74) Representative: Davies, Gregory Mark
(86) International application number: PCT/GB2003/003251
(87) International publication number: WO 2004/011204

(56) References cited:
- EP-A- 0 294 617
- EP-A- 0 813 934
- DE-A- 3 511 692
- GB-A- 2 364 893
- US-A- 2 869 231
- US-A- 3 339 598
- US-A- 3 412 767
- US-A- 4 807 361
- US-A- 5 826 342
- US-B1- 6 401 342
- PATENT ABSTRACTS OF JAPAN vol. 1995, no. 10, 30 November 1995 (1995-11-30) & JP 07 171802 A (HITACHI KOKI CO LTD), 11 July 1995 (1995-07-11)

## Description

The present invention relates to a glazing panel cut-out tool and in particular to hand held cut-out tool for use in cutting glazing panel bonding materials such as polyurethane bonding material. Bonded panels (vehicle or the like) may be released by using the device at perimeter accessible bonded zones of the panel. In particular, the device of the invention is particularly suitable for use in cutting or paring polyurethane bonding material used to bond vehicle panels such as vehicle windscreens in vehicle windscreen openings.

According to the present invention, there is provided a glazing panel cut-out tool for use in removing vehicle glazing panels, the tool comprising an elongate forward blade carrier providing a forward handle for the tool, and elongate rearward handle spaced from the forward blade carrier and a bridge portion interconnecting the forward blade carrier and the rearward handle which both depend from the bridge portion, the tool including a rotatable mounting enabling rotation of the blade carrier with respect to the rearward handle about a rotational axis orientated in the longitudinal direction of the blade carrier, in order to reconfigure the tool.

Preferably, the rearward handle and forward blade carrier are lockable relative to one another permitting setting of the device in re-configured orientations.

The forward blade carrier typically acts as a forward handle for gripping by one of the user's hands. The rearward handle is gripped by the other of the user's hands. The spaced separate handles ensure that the device is ergonomically attractive and efficient to use.

Because the rearward handle can be moved to be reorientated relative to the forward blade carrier/handle, the device is convenient to use around corners or bends such as around the peripheral corner of a vehicle windscreen when the device is used for removing vehicle windscreens. Because the device locks in its reorientated configuration, the device is sturdy and safe for use.

Typically the rearward handle is moveable in a planetary orbit (rotationally) about the forward blade carrier. The rearward handle is preferably moveable through substantially 90° or more (more preferably 180°, or more preferably still 270°) about the forward blade carrier.

The rearward handle is arranged to be locked in a plurality of orientations relative to the forward blade carrier. The device preferably includes a lock arrangement for this purpose. The lock arrangement beneficially comprises a lock actuator accessible to the user of the device. Beneficially a biasing arrangement is provided for biasing the lock arrangement normally to the locked position.

In order to facilitate the orbital movement of the rearward handle about the forward blade carrier, a rotatable mounting is beneficially provided at the blade carrier.

The bridge portion is beneficially arranged to move in unison with the rearward handle about the blade carrier. The bridge portion and rearward handle are typically effectively integral with one another. The forward end of the bridge portion is typically mounted rotatably at a rotatable mounting at the blade carrier. The rearward handle and the blade carrier preferably lie in substantially the same plane. The rearward handle and blade carrier are therefore substantially parallel (or have substantially parallel axes).

The device preferably includes a blade adjustment arrangement for adjusting the position of the blade relative to the blade carrier. The blade adjustment arrangement is beneficially adjustable by means of an actuator provided on the exterior of the device. The arrangement is actuatable to selectively vary the projecting distance of the blade from the blade carrier. In one embodiment, the blade adjustment arrangement may include a ratchet mechanism to advance and/or retract the blade relative to the blade carrier.

Typically the blade carrier includes an internal receiving recess for receiving the blade. A blade retaining element is beneficially provided for securing the blade with the blade carrier; the blade retaining element is beneficially resiliently biased to a retaining position.

The device may include engagement means for engaging a substrate at a level spaced (upwardly) from the terminal portion of the blade. For example where the device is used for removing vehicle windscreens, the engagement means will engage the external surface of the windscreen proximate the peripheral edge thereof. The cutting portion of the blade is inserted through the bonding material on the underside surface of the windscreen. The engagement means is beneficially carried by the blade carrier and beneficially comprises rotatable engagement means such as for example a roller. As an alternative, a ski or skid may be provided.

The cutting blade typically comprises an elongate mounting portion for mounting to the blade carrier and a cutting portion extending substantially transversely to the mounting portion.

The cutting portion of the blade beneficially extends transversely to the plane in which the blade carrier and rearward handle lie. Beneficially the cutting portion of the blade tapers to an apex.

It is preferred that the device includes a lubrication arrangement for delivering lubricant to the blade. Beneficially the lubrication arrangement includes a lubricant reservoir which is preferably provided internally of the rearward handle. Lubricant delivery means beneficially delivers the lubricant along the blade carrier to pass to the blade. The delivery means is beneficially arranged to deliver the lubricant to the blade along a path internally of the blade carrier. It is preferred that the lubricant delivery means includes a conduit spanning the bridge portion of the device. A lubricant injector or nozzle is beneficially provided for the blade carrier arranged to dispense the lubricant to the region of the blade. A lubricant delivery actuator is preferably mounted on the exterior of the device being actuatable preferably to pump the lubricant fluid.

The invention will now be further described in specific embodiments, by way of example only, and with reference to the accompanying drawings, in which:
Figure 1 is a perspective view of a first embodiment of cutting device in accordance with the invention;

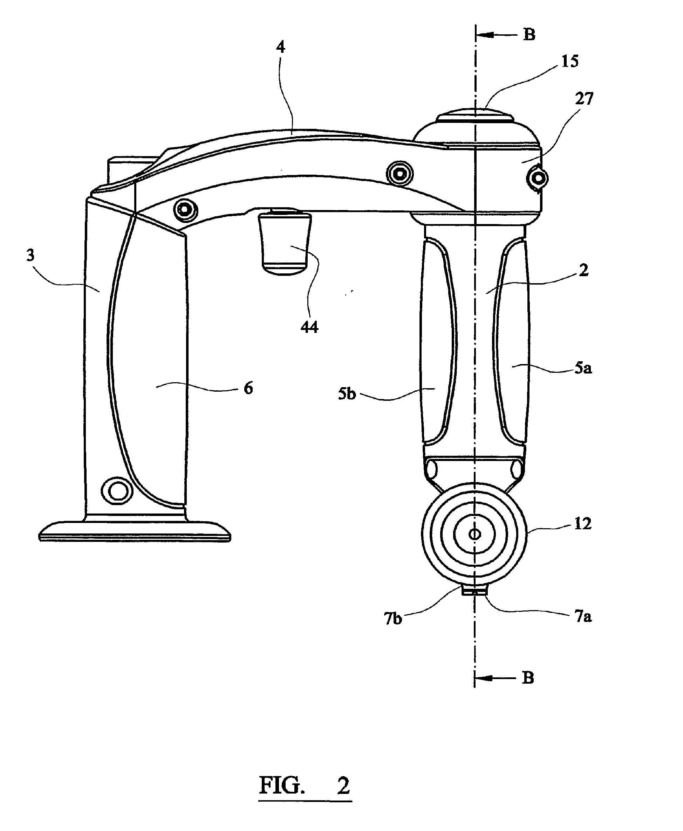

Figure 2 is a side view of the cutting device of Figure 1;

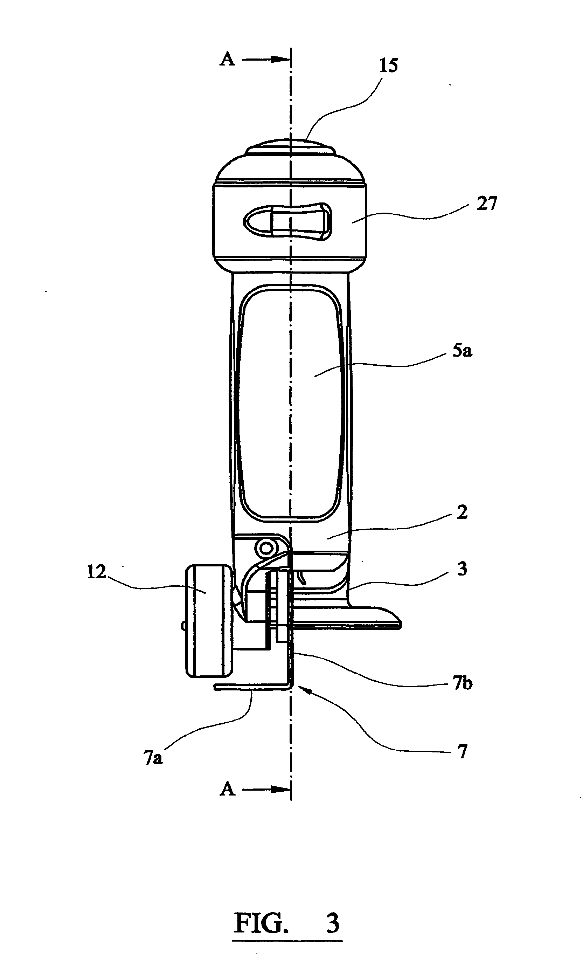

Figure 3 is a front end view of the device of Figures 1 and 2;

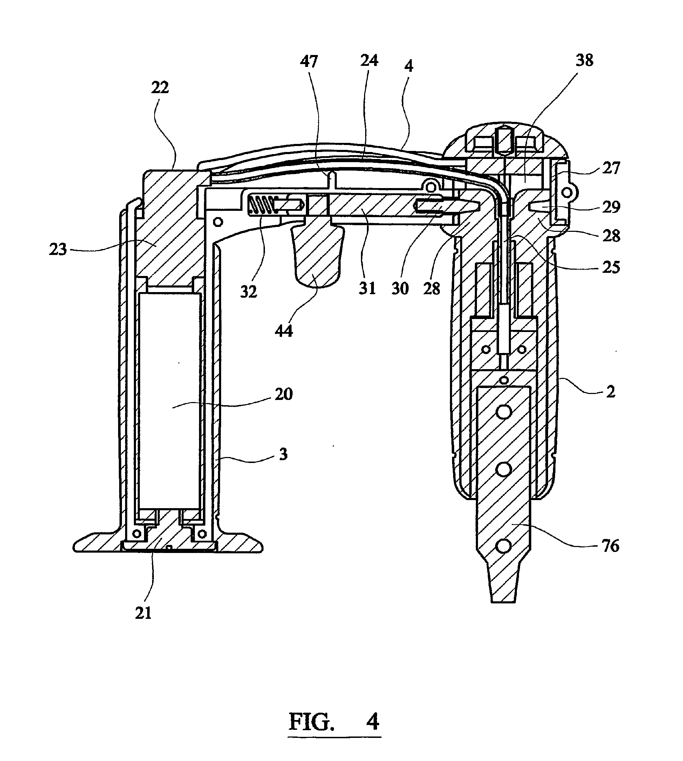

Figure 4 is a schematic sectional view (along A-A in Figure 3) of the device of the preceding Figures;
Figure 5 is a schematic sectional view (along B-B in Figure 2) of the device of the preceding Figures;
Figure 6 is a schematic plan view of the device of the previous Figures;

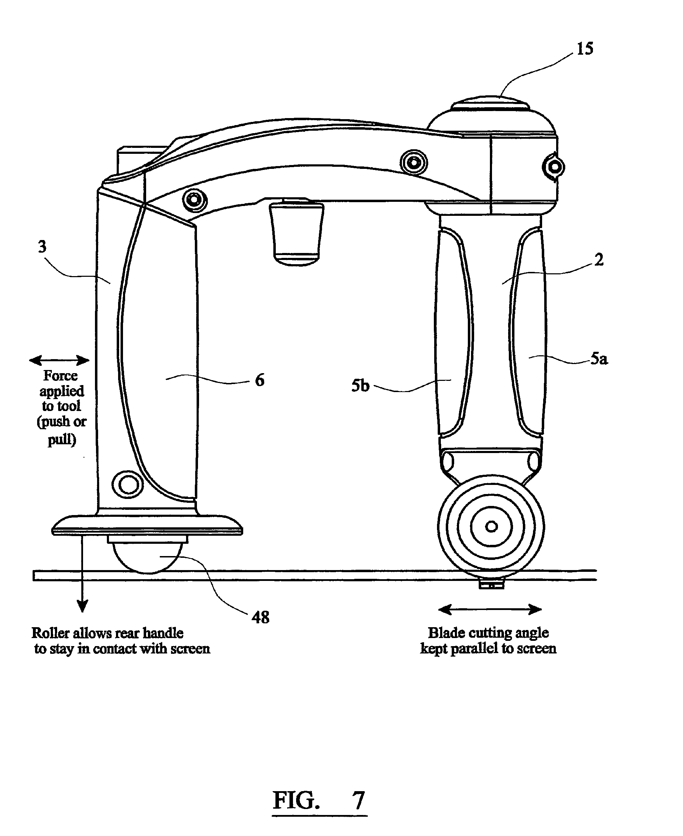

Figure 7 is a side view of alternative cutting device generally similar to the apparatus of Figures 1 to 6;
Figure 8 is a schematic sectional view showing the cutting of a bonded joint, in particular a windscreen or other element, bonded to a support surround by means of a polyurethane bonding bead.
Figure 9 is a schematic plan view of a test blade in accordance with the invention;
Figure 10 is a schematic sectional view along C-C in Figure 9 for a first embodiment of blade;
Figure 11 is a sectional view along C-C in Figure 9 for a second embodiment of blade;
Figure 12 is a graphic representation of force encountered in using the blade of the invention;
Figure 13 is a plot showing the force encountered in a test procedure involving various blades;
Figure 14 is a table of test results;
Figure 15 is a schematic perspective view of a modified embodiment of cutting device in accordance with the invention; and
Figure 16 is a detailed, part sectional view of the embodiment of Figure 15.

Referring to the drawings, there is shown a cut-out device 1 particularly suited for cutting operations such as cutting, paring or slicing bonding material 50 (typically polyurethane) bonding structural panels, such as for example a vehicle windscreen 51 to a vehicle windscreen opening 52.

The cut-out device 1 has a forward blade support handle 2 and a rearward handle 3 spaced from the forward blade support handle 2 by a bridge portion 4. Forward blade support handle 2 includes rubber grip pads 5a, 5b and rear handle 3 includes ruber grip pad 6 for enhanced ergonomic action and efficiency of use.

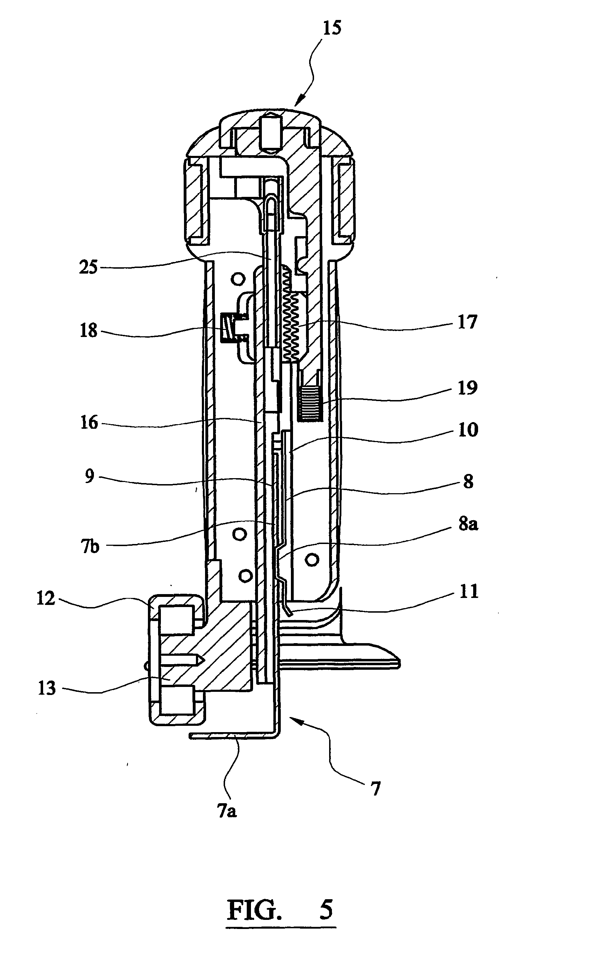

The forward blade support handle 2 acts as a housing and fixing for an 'L' shaped cutting blade 7 which has a laterally projecting cutting portion 7a tapering to an apex, and an upwardly projecting fixing length 7b. As shown most clearly in figure 5, the fixing length 7b of the blade 7 is received in an internal guide and receiving channel 9 provided in the forward handle 2. The fixing length 7b includes a circular aperture through its thickness dimension into which nestles a projection 8a of a quick release blade fixing leaf spring 8. Leaf spring 8 is fixed at its proximal end 10 and includes a manually accessible tab 11 at its distal end which may be moved outwardly to disengage the projection 8a from engagement with the fixing length 7b of the blade. The leaf spring 8 is normally biased to the engagement position as shown in Figure 5.

The distal portion of the blade support handle 2 carries a guide roller 12 mounted on a shaft 13. The projecting cutting portion 7a of the blade 7 is below the level of the perimeter of the roller 12. In use, the roller 12 sits on the surface of the windscreen 51 such that the blade cutting portion 7a passes through the polyurethane bonding material 50 present between the windscreen and the support frame 52 of the vehicle windscreen opening. The use of a roller provides good low fiction contact and aids in the ease of use of the device. As an alternative a ski or skid arrangement could be used in place of a roller.

This arrangement provides consistent depth or level of cut of the bonding material as the device is moved about the windscreen. A further feature of the device is the ability to select the depth of cut required by means of adjusting the level of the projecting cutting portion 7a of the blade with respect to the roller 12.

A blade depth adjustment arrangement is accordingly incorporated into the device including a manually accessible button 15 which is depressed in order to increase the depth of cut performed by the blade. The button 15 when depressed advances the blade carrier 16 to increase the spacing of blade portion 7a below the lower most portion of roller 12. A quick release ratchet mechanism 17 including biasing springs 18, 19 acts to enable restoration of the blade carrier 16 and blade 7 to a datum orientation when removed from cutting the polyurethane bonding material.

In order to further facilitate the bonding material cutting process the device includes the facility to deliver a cutting lubricant to the location of the cut. The lubricant is delivered internally of the forward handle 2 passing down the fixing portion blade length 7b to the cutting portion 7a. The rear handle 3 includes an internal lubricant reservoir 20 which may be filled via a filling port closed by a stopper 21. A finger or thumb actuated lubricant release button 22 is provided for a pump actuator 23 which pressurises the fluid in the reservoir 20 causing lubricant to be pumped from the reservoir along a flexible lubricant tube 24 extending internally along the length of the bridge portion 4 to connect with an injector 25 provided internally of the forward handle 2. The lubricant is dispensed from the injector via an internal channel 25 along the fixing length 7b of the blade to be delivered to the cutting portion 7a.

The arrangement of the forward and rear handles 2, 3 and connecting bridge 4 in the same plane (force application plane) and the transverse arrangement of the blade provides a force application plane which is parallel to the cutting plane direction, resulting in a highly efficient cut.

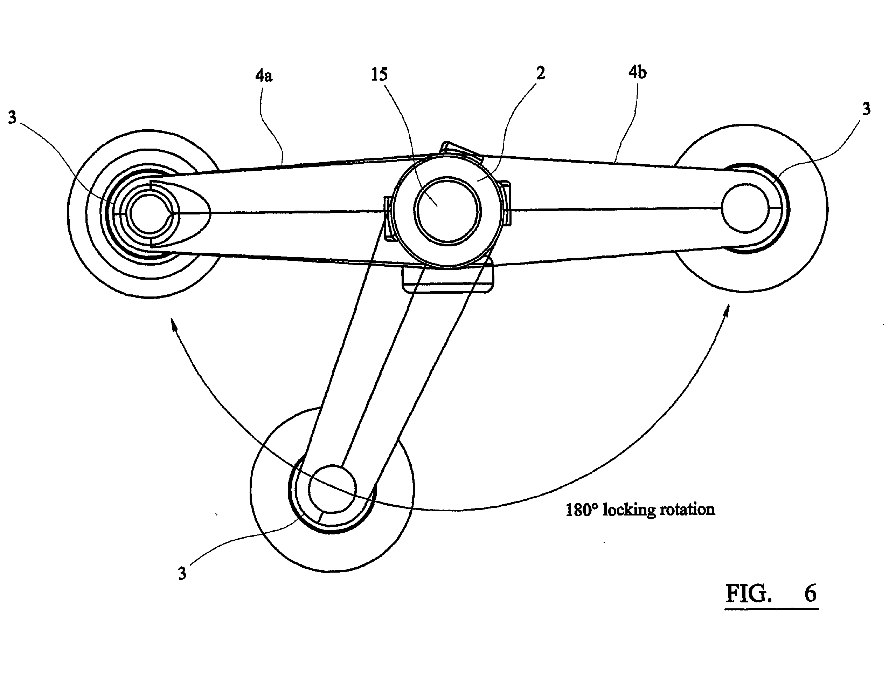

In order to enable the device to be operated to cut around the corners of the windscreen (or other bonded panel), the device includes the facility for the rear handle 3 and bridge 4 to pivot or rotate about the forward handle 2. A collar 27 forms a forward part of the bridge portion 4 and is bushed to rotate about a boss 28 comprising the forward handle 2. The boss 28 includes a series of shaped recesses 29 shaped and dimensioned to receive, in mating engagement, a spigot 30 attached to a forward portion of a locking bolt 31. Typically the shaped recesses 29 are provided at angular positions 0° and 180° about the boss at least. Such recesses may be provided at 90° intervals or narrower angular spacing. Spacing at 0° and 180° enables the handles 2, 3 to lock together at rotationally mirrored positions (see the position of bridge 4a and 4b in Figure 6) enabling the apparatus to be manoeuvered easily about the corner of a windscreen or window pane. The locking bolt 31 is normally biased to an advanced position by means of a spring 32. A finger retractable trigger 44 presents through a slot in the bridge portion 4 to enable the bolt 31 and spigot 30 to be retracted so as to permit rotation of the rear handle 3 and bridge portion 4 about the forward handle 2. The lubricant tube 24 passes through an annular space 38 enabling the tube to swing through the required angular sweep as the handle 3 and bridge portion 4 rotate. The tube 24 presses against rib 47 when the pump button 2 is pressed to aid pumping of the lubricant.

The rear handle 3 may be held clear of the windscreen surface or alternatively may be provided with contact means to contact the windscreen surface. Such contact means may for example be a roller ball 48 or the like. The provision of a roller ball 48 contact at the base of the rear handle 3 assists the operator to maintain a direction of pull and push force on the device which is parallel to the blade cutting direction. With the aid of pressure on the glass from the handle 3 by the operator and point contact on the screen (with 4 degrees of freedom) provided by the roller ball 48, irrespective of the direction of the resultant force applied by the operator, the horizontal component of the force will always remain parallel to the glass screen surface. The device also provides rigid parallelogram frame thus insuring minimisation of the force components which are not in line with blade cutting direction. Consequently there is minimal tilt of the blade cutting portion 7a and therefore minimal friction and resistance which would otherwise occur due to non-optimisation of cutting angle. This results in less effort required in the cutting process. In addition, the roller ball provides ergonomic benefits enabling maximum force to be applied by the user's arms and shoulders independent of the orientation of the remainder of the user's body. An additional benefit of the device is increased manoeuvrability providing ease of movement around the corners and at the point of insertion of blade cutting portion 7a at the start of the cutting process.

As an alternative to a roller ball 48 arrangement, a ski or skid arrangement may be provided as contact means for the rear handle 3.

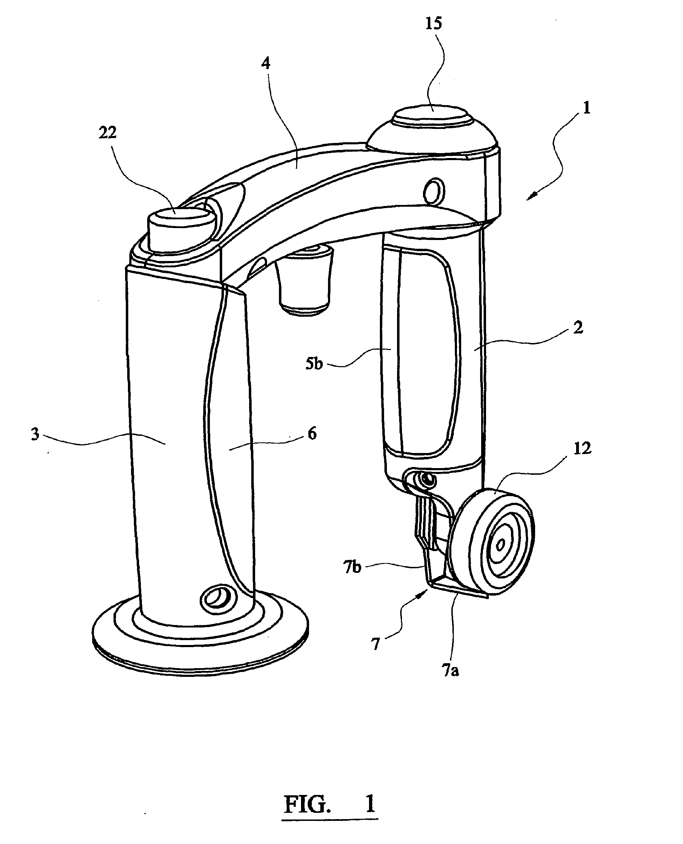

In use, the rear handle 3 and bridge 4 are rotated about the forward handle 2 by 90° from the position shown in Figure 1 such that the cutting portion 7a of the blade 7 points away from the rear handle 3 with the blade apex in alignment with the rear handle 3 bridge portion 4 and forward handle alignment plane. In this configuration, the user can grip the device solidly with both hands and make an insertion cut into the polyurethane bonding material with the apex of the cutting portion 7a of the blade 7. This facility enables controlled and accurate user positioning of the blade for the insertion cut and application of maximum user force or insertion in a controlled manner. In addition to producing a technically accurate blade insertion, user safety is also maximised.

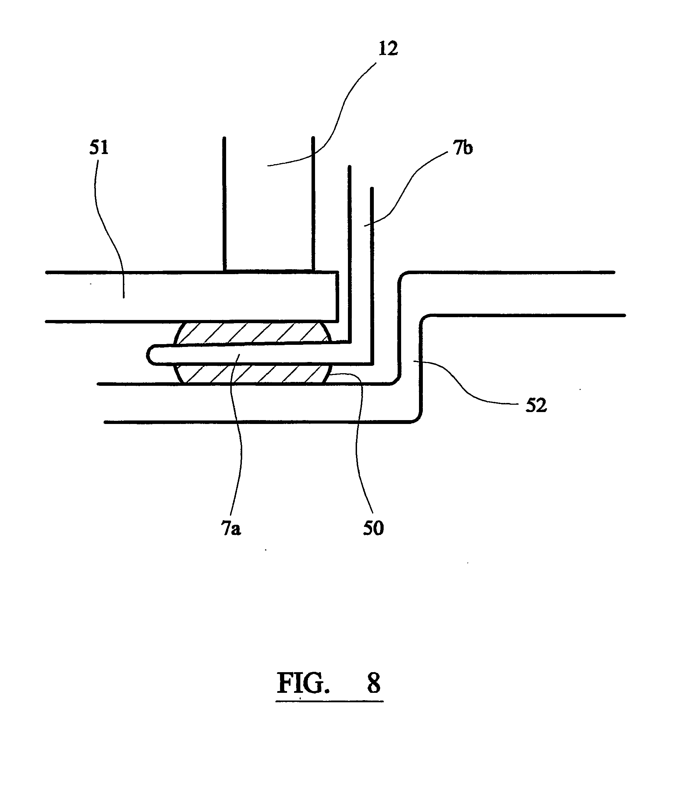

With the blade 7a now embedded in the polyurethane bonding bead 30 as shown in Figure 8), the rear handle 3 and bridge 4 are rotated back through 90° to the configuration shown in Figure 1. The device 1 can then be operated in an ergonomic two handed fashion by the user, the blade 7a being dragged through the bonding bead 30 to separate the windscreen 31 (or other panel or element) from the support surround 32. The depth of cut can be altered manually by the user using the blade height adjustment facility of the device (button 15 and associated corner 16 and ratchet mechanism 17). The cutting portion 7a of the blade can be lubricated with lubricant in the manner described above at the discretion of the user.

In order to pass around an edge of the windscreen whilst cutting, the user disengages the spigot 30 from engagement with a respective recess 29 and rotates the rear handle 3 and bridge 4 by 180° about the forward handle 2 and once again locks the handles 2, 3 and bridge 4 in a locked orientation permitting the tool to be continued to be dragged about the screen.

The cut out device of the invention provides significant benefits in terms of ease and accuracy of use, quality of cut achieved and speed of operation. In addition, health and safety benefits are observed for the user. Specific benefits and advantages are described hereafter.

The device provides a manual tool for hand held operation, having a blade where the cutting edge is maintained parallel to the windscreen and user body such that minimum cutting force and minimum friction is experienced. The parrallegram double handle ensures an ergonomic orientation which provides an optimum condition for transmission of force from the user's shoulder and elbows to the tool which is in turn transmitted to the cutting edge of the blade.

The device ensures the cutting plane and force application plane is maintained in parallel through effectively controlled device adjustment features and a flexible guiding system. Also the use of a roller and/or roller ball minimises any adverse friction. The rigid structure of the handles and bridge requires a change of orientation in order to cut around corners or bends which is achieved by an axial rotation of the rear handle and bridge in relation the forward handle blade holder arrangement. The trigger 44 is retracted to facilitate release of the rotation lock enabling rotation up to 360° in a controlled manner with pre-set friction. The arrangement is capable of pre-set locking at 0° 180 or other angles as the user may require.

The cutting height of the blade 7a is determined and selected by the user for example to leave a predetermined amount of residual bonding material present. The blade quick release system enables replacement of blade with ease, whilst maintaining the correct stiffness for cutting operation.

The use of liquid lubricant dispensed at correct time and location to reduce the friction between the blade and the polyurethane has proven to reduce effort. Furthermore when applied with the blade in parallel to the cutting surface, combined with less force, such reduction in friction results in lower required cutting force. The lubricant dispensing system may be provided as a disposable item, which enables easy replacement.

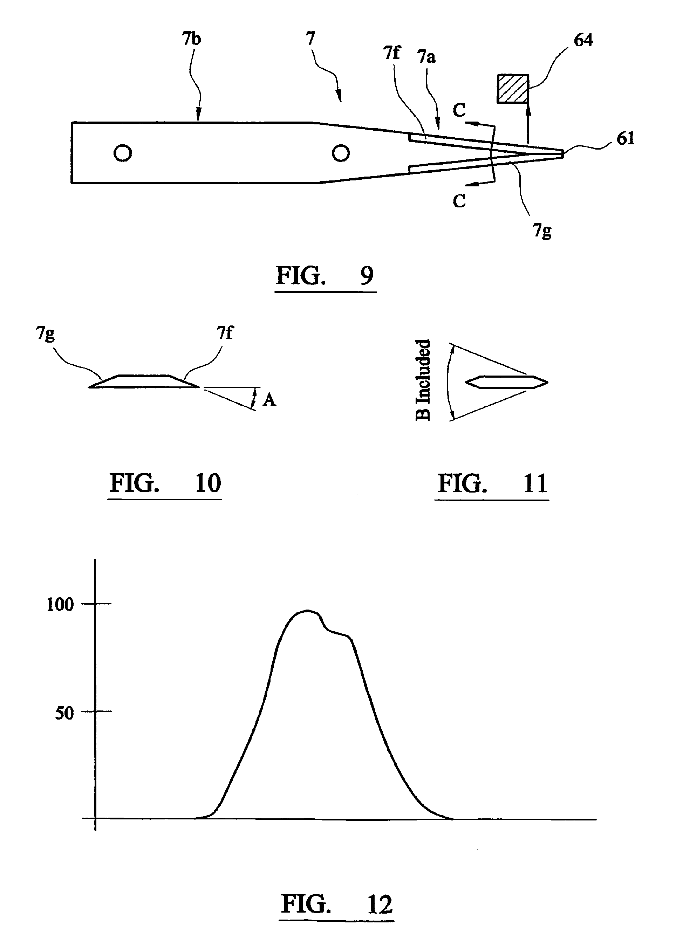

Certain novel and inventive features of blade design particularly suited to the use of the present invention have also been developed. Figure 9 shows a cutting blade 7 having a cutting portion 7a tapering to an apex 61 and including a pair of opposed tapering cutting edges 7g, 7f each having a respective cutting edge bevel angle A, B. In production versions of the blade, the blade 7 is bent to a right angle to have fixing portion 7b and cutting portion 7a extending in mutually perpendicular directions. For the purposes of testing, the blade 7 was used in a flat, unbent condition. The tapering edges 7g, 7f are bevelled such that the bevels merge at the apex 61.

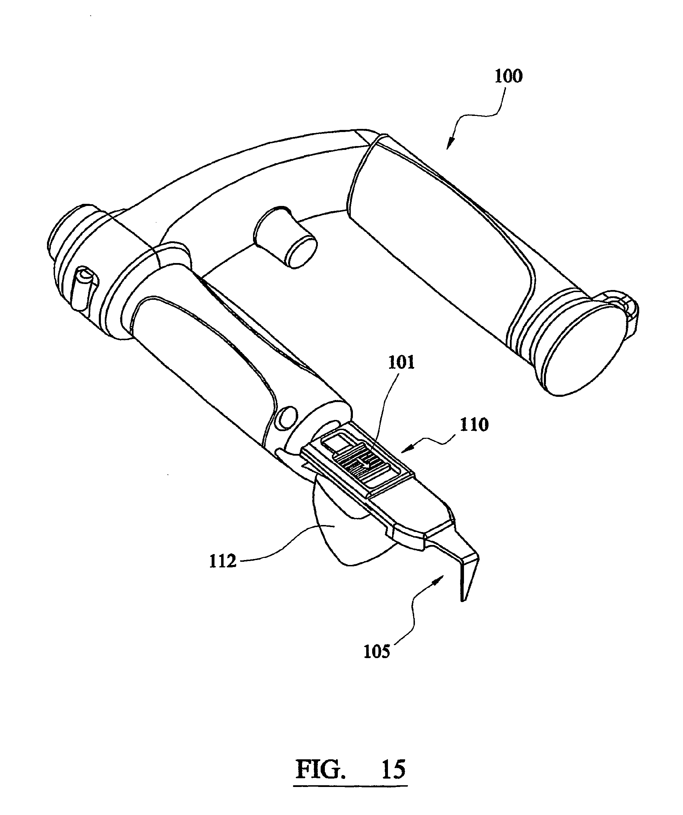

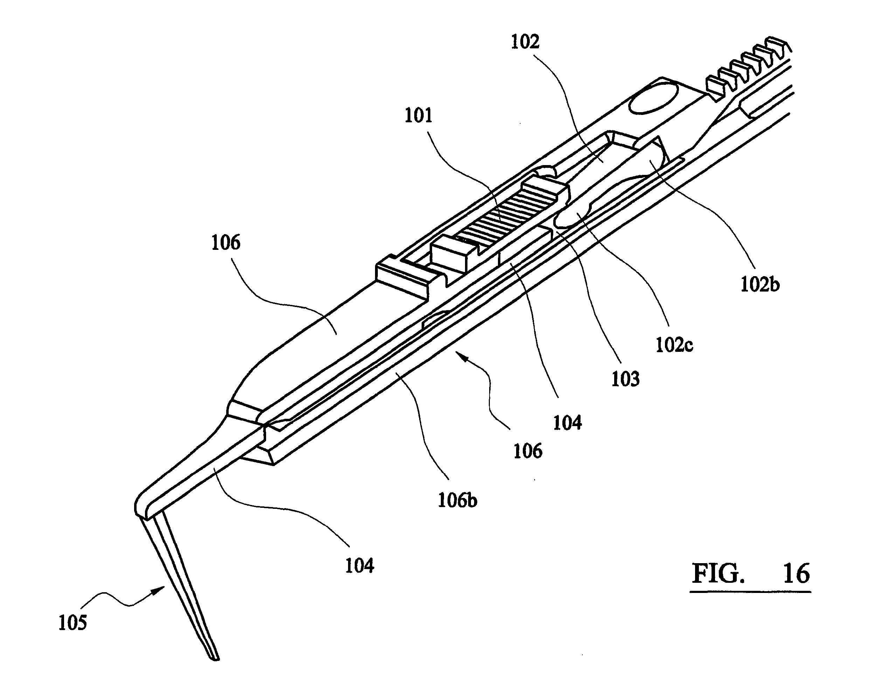

Referring now to Figures 15 and 16 there is shown an alternative embodiment of cut-out device 100 which is generally similar in most constructional and operational aspects to the earlier described embodiment. In this embodiment the roller 12 is replaced by a forward support skid 112 and a blade quick release/quick change arrangement 110 is provided.

For the blade quick release arrangement 110, an externally accessible button 101 is biased by a spring (not shown) to urge hook 102 to an engagement position in which it is received within an aperture 103 through a tang 104 of an L-shaped cut-out blade 105. Urging the release button 101 downwardly against the biassing spring enables the tang 104 of blade 105 to be retracted from the space between wall 106a, 106b of the blade housing 106. The hook 102 pivots about a bulbous end 102b and the locating hook end 102c is provided with chamfered portions permitting the blade to be inserted and retracted and engage with the aperture 103.

In order to evaluate the cutting forces when using the blade 7 in the windscreen cut-out 1 tool a trial was implemented using standard silicon rubber test media and test blades manufactured with differing sharp edge geometry.

Test blades were jigged on a servo driven slide providing blade speed and positional control. The silicon rubber test media used was in the form of 8mm square section extrusion 64 of 70-shore hardness, and treated to achieve consistent properties. The rubber 64 was mounted on a platform load cell in a former which presented a concave shape towards the blade as this was thought to increase the tendency for the rubber to grip the blade. In plan view (see Figure 9) the rubber 64 was aligned 8mm from the apex 61 of the blade 7 so that it would be cut in the middle of what would be the working area of the cranked end of a production blade. The attitude of the centreline of the blade was normal to the direction of travel and thus the reaction force between the rubber and blade would be measured by one of the orthogonal axis of the load cell. A PC was used to control the motions of the blade (i.e. slide) and also to capture the load cell data. Before tests commenced the load cell/conditioning amplifier and software data routine were calibrated and sensitivity set to enable full-scale output of the amplifier at 500N.

1.25mm thick 0.8% C steel was readily available from which to manufacture the test blades. For convenience the test pieces were made flat and the ground edges were produced after hardening and tempering to 50Rc. Sharpened bevels were produced one side at a time using a general purpose wheel on a tool room surface grinder. For this trial 20° angle would be the minimum due to the thinner material and the increased bevel width. The line of intersection of these reaches further back from the tip and actually results in a reduction of blade thickness along this slope. Four samples of single and double bevelled profiles with 50°, 40°, 30° and 20° included angles were tested.

A cutting stroke of 18mm was used to ensure the entire blade cut completely through the media and at a speed of 20mm/sec. As a consequence of this a force curve similar in shape to that in Figure 12 was obtained. The rising force to the first peak is the result of a build up of the compressive force between rubber and blade cutting edge until the point where the rubber is actually penetrated (the peak). From this point there is a slight reduction to the beginnings of a plateau area where some or the entire blade is enclosed by the rubber. Next follows a decay as the blade exits the rubber.

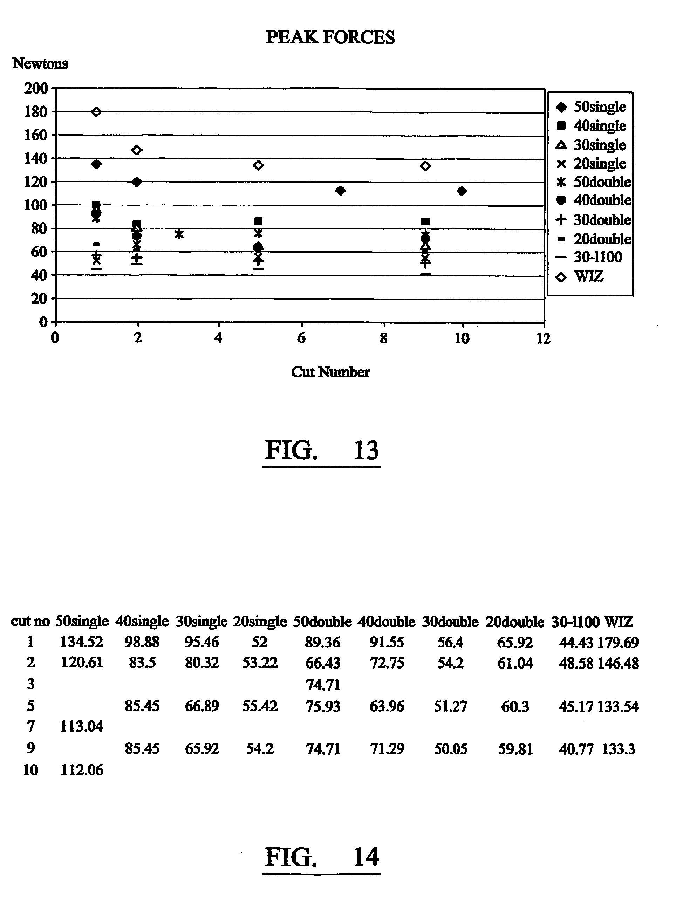

As a measure of the initial sharpness of the blade the peak force reading was recorded. 9/10 cuts per blade were carried out and the peak force recorded on cuts 1, 2, 5, 9. This was a precautionary measure to see whether the first readings may be affected by burrs produced when grinding. For additional comparison the 50 double sample was then re-sharpened at 30° included angle using a sharpening machine, which has spiral-interlocking wheels and grinds both sides simultaneously. This was then tested along with a straightened out WIZ blade. Figures 13 and 14 show the results obtained.

The forces measured on each blade showed reasonably good correlation. There was little adverse affect from burrs. Each blade demonstrated a slight fall off in measured peak force over the 9 cuts. Generally the blades in each series were ranked according to included angle and angle for angle double bevels lower forces than single, with the exception of one anomaly the 20° double blade. These results are sufficient to show that a double bevelled shallower angled blade will have a lower cutting force than the current production (45° single).

Various aspects of the invention have been primarily described in relation to a cut-out device for use in removal or releasing of vehicle windscreens bonded in a vehicle windscreen opening by an interposed polyurethane bonding bead. It will be appreciated that the invention has applicability in other situations for example in paring or refresh scraping polyurethane or other plastics material or for example in removal of architectural window panes or other panels or components bonded to substrates by peripherally accessible bonding material.

## Claims

1. A glazing panel cut-out tool (1) for use in removing vehicle glazing panels, the tool comprising an elongate forward blade carrier (2) providing a forward handle for the tool, and an elongate rearward handle (3) spaced from the forward blade carrier and a bridge portion (4), interconnecting the forward blade carrier and the rearward handle which both depend from the bridge portion, the tool including a rotatable mounting (27, 28) enabling rotation of the blade carrier with respect to the rearward handle about a rotational axis orientated in the longitudinal direction of the blade carrier (2), in order to reconfigure the tool.

2. A glazing panel cut-out tool according to claim 1, wherein:
i) the rearward handle (3) and the forward blade carrier (2) are lockable relative to one another permitting setting of the tool in re-configured orientations; and/or
ii) the rearward handle (3) is movable planetary about the forward blade carrier (2); and/or
iii) the rearward handle (3) is movable in an arc about the forward blade carrier (2); and/or
iv) the rearward handle (3) is movable through substantially 90 degrees or more about the forward blade carrier (2); and/or
v) the rearward handle (3) is movable through substantially 180 degrees or more about the forward blade carrier (2); and/or
vi) the rearward handle (3) is movable through substantially 270 degrees or more about the forward blade carrier (2); and/or
vii) the rearward handle (3) is movable through substantially 360 degrees about the forward blade carrier (2); and/or
viii) the rearward handle (3) is arrange to be locked in a plurality of orientations relative to the forward blade carrier (2).

3. A glazing panel cut-out tool according to any preceding claim, wherein:
i) the rotatable mounting (27, 28) is provided at the blade carrier for mounting the rearward handle (3) rotatably relative to the blade carrier (2); and/or
ii) the blade carrier includes an external surface portion providing a forward handle; and/or
iii) the bridge portion (4) is arranged to move in unison with the rearward handle (3) about the blade carrier (2); and/or
iv) the rearward handle (3) axis, blade carrier and bridge portion (4) lie substantially in the same plane; and/or
v) the rearward handle (3) and the blade carrier (2) are substantially parallel to one another; and/or
vi) a blade adjustment arrangement (15, 16, 17) is provided enabling adjustment of the position of the blade (7) relative to the blade carrier wherein:
a) the blade adjustment arrangement is adjustable by means of an actuator (15) provided on the exterior of the tool; and/or
b) the blade adjustment arrangement is actuatable to selectively vary the projection distance of the blade (7) from the blade carrier (2), and/or
c) the blade adjustment arrangement includes a ratchet mechanism (17) to advance and/or retract the blade (7) relative to the blade carrier (2); and/or
vii) the blade carrier (20 includes an internal receiving recess for receiving the blade

4. A glazing panels cut-out tool according to any preceding claim, wherein:
i) a blade retaining element is provided for securing the blade with the blade carrier, the blade retaining element being resiliently biased to the retaining position, and/or
ii) engagement means (12) is provided for engaging a substrate at a level spaced from the terminal portion of the blade.
iii) the blade (7) comprises an elongate mounting portion (7b) for mounting to the blade carrier and a cutting portion (7a) extending transversely to the mounting portion; and or
iv) the cutting portion (7a) of the blade extends transversely to the plane in which the blade carrier (2) and rearward handle (3) lie.

5. A glazing panel cut-out tool according to any preceding claim, wherein the tool includes a lubrication arrangement (20, 23, 24) for delivering lubricant to the blade,
i) wherein the lubrication arrangement includes a lubricant reservoir (20); and/or
ii) including delivery means (25) for delivering the lubricant via the blade carrier (2) to the blade (7); and/or
iii) wherein lubricant delivery means includes a conduit (24) spanning the bridge portion (4); and/or
iv) wherein a lubricant injector or nozzle (25) is provided for the blade carrier (2) arranged to dispense the lubricant to the region of the blade (7); and/or
v) wherein a lubricant delivery actuator (22) is mounted on the exterior of the device which operates to pump the lubricant fluid; and/or

6. A glazing panel cut-out tool according to any preceding claim, including a blade (7) having a cutting portion (7a) and a mounting portion (7b) extending substantially transversely to the cutting portion.

7. A method of removing a vehicle glazing panel using a manually operable glazing panel cut-out tool, the tool comprising an elongate forward blade carrier (2) providing a forward handle for the device, and an elongate rearward handle (3) spaced from the forward blade carrier and a bridge portion (4), interconnecting the forward blade carrier and the rearward handle which both depend from the bridge portion, the device including a rotatable mounting (27, 28) enabling rotation of the blade carrier with respect to the rearward handle about a rotational axis orientated in the longitudinal direction of the blade carrier (2), in order to reconfigure the device.

## Patentansprüche

1. Ausschneidwerkzeug (1) für Glasscheiben zur Benutzung beim Entfernen von Fahrzeugglasscheiben, wobei das Werkzeug einen länglichen vorderen Blattträger (2), der eine vordere Handhabe für das Werkzeug bildet, eine längliche hintere Handhabe (3), die von dem vorderen Blattträger im Abstand angeordnet ist, sowie einen Brückenabschnitt (4) aufweist, der den vorderen Blattträger und die hintere Handhabe, die beide vom Brückenabschnitt ausgehen, miteinander verbindet, und wobei das Werkzeug eine drehbare Aufhängung (27, 28) enthält, die ein Verdrehen des Blattträgers gegenüber der hinteren Handhabe um eine Drehachse zulässt, die in Längsrichtung des Blattträgers (2) ausgerichtet ist, um das Werkzeug neu zu konfigurieren.

2. Ausschneidwerkzeug für Glasscheiben nach Anspruch 1, **dadurch gekennzeichnet, dass**
(i) die hintere Handhabe (3) und der vordere Blattträger (2) relativ zueinander verriegelbar sind, um ein Einstellen des Werkzeugs in neu konfigurierten Stellungen zu ermöglichen, und/oder
(ii) die hintere Handhabe (3) planetenartig um den vorderen Blattträger (2) bewegbar ist und/oder
(iii) die hintere Handhabe (3) in einem Bogen um den vorderen Blattträger (2) bewegbar ist und/oder
(iv) die hintere Handhabe (3) um im Wesentlichen 90 Grad oder mehr um den vorderen Blattträger (2) bewegbar ist und/oder
(v) die hintere Handhabe (3) um im Wesentlichen 180 Grad oder mehr um den vorderen Blattträger (2) bewegbar ist und/oder
(vi) die hintere Handhabe (3) um im Wesentlichen 270 Grad oder mehr um den vorderen Blattträger (2) bewegbar ist und/oder
(vii) die hintere Handhabe (3) um im Wesentlichen 360 Grad um den vorderen Blattträger (2) bewegbar ist und/oder
(viii) die hintere Handhabe (3) ausgebildet ist, in einer Mehrzahl von Stellungen gegenüber dem vorderen Blattträger (2) verriegelt zu werden.

3. Ausschneidwerkzeug für Glasscheiben nach einem oder mehreren der vorhergehenden Ansprüche, **dadurch gekennzeichnet, dass**
(i) die drehbare Aufhängung (27, 28) am Blattträger vorgesehen ist zum drehbaren Haltern der hinteren Handhabe (3) gegenüber dem Blattträger (2) und/oder
(ii) der Blattträger einen externen Oberflächenabschnitt aufweist, der eine vordere Handhabe bildet, und/oder
(iii) der Brückenabschnitt (4) angeordnet ist, um sich zusammen mit der hinteren Handhabe (3) um den Blattträger (2) zu bewegen, und/oder
(iv) die Achse der hinteren Handhabe (3), der Blattträger und der Brückenabschnitt (4) im Wesentlichen in derselben Ebene liegen und/oder
(v) die hintere Handhabe (3) und der Blattträger (2) im Wesentlichen parallel zueinander angeordnet sind und/oder
(vi) eine Blatteinstellvorrichtung (15, 16, 17) vorgesehen ist, die eine Einstellung der Position des Blattes (7) gegenüber dem Blattträger ermöglicht, wobei
(a) die Blatteinstellvorrichtung mittels eines Betätigungsgliedes (15) außen am Werkzeug einstellbar ist und/oder
(b) die Blatteinstellvorrichtung betätigbar ist, um den Vorsprungsabstand des Blattes (7) von dem Blattträger (2) wahlweise zu variieren und/oder
(c) die Blatteinstellvorrichtung einen Ratschenmechanismus (17) enthält, um das Blatt (7) gegenüber dem Blattträger (2) vorzuschieben und/oder zurückzuziehen, und/oder
(vii) der Blattträger (2) eine interne Aufnahmeaussparung zur Aufnahme des Blattes enthält.

4. Ausschneidwerkzeug für Glasscheiben nach einem oder mehreren der vorhergehenden Ansprüche, **dadurch gekennzeichnet, dass**
(i) ein Blatthalteelement zum Halten des Blattes an dem Blattträger vorgesehen ist, wobei das Blatthalteelement elastisch in die Halteposition vorgespannt ist, und/oder
(ii) Angriffsmittel (12) zum Angreifen an einem Substrat in einer Ebene vorgesehen sind, die sich im Abstand von dem Endabschnitt des Blattes befindet,
(iii) das Blatt (7) einen länglichen Befestigungsabschnitt (7b) zum Befestigen an dem Blattträger aufweist sowie einen Schneidabschnitt (7a), der sich quer zu dem Befestigungsabschnitt erstreckt, und/oder
(iv) der Schneidabschnitt (7a) des Blattes sich quer zu der Ebene erstreckt, in der der Blattträger (2) und die hintere Handhabe (3) liegen.

5. Ausschneidwerkzeug für Glasscheiben nach einem oder mehreren der vorhergehenden Ansprüche, **dadurch gekennzeichnet, dass** das Werkzeug eine Schmiervorrichtung (20, 23, 24) aufweist zum Abgeben von Schmiermittel an das Blatt,
(i) dass die Schmiervorrichtung ein Schmiermittelreservoir (20) enthält und/oder
(ii) eine Abgabevorrichtung (25) zum Abgeben von Schmiermittel über den Blattträger (2) an das Blatt (7) vorgesehen ist und/oder
(iii) dass das Schmiermittelabgabemittel eine Leitung (24) enthält, die den Brückenabschnitt (4) überbrückt, und/oder
(iv) dass ein Schmiermittelinjektor oder eine Schmiermitteldüse (25) für den Blattträger (2) vorgesehen ist, der/die angeordnet ist, um das Schmiermittel an den Bereich des Blattes (7) abzugeben, und/oder
(v) dass ein Schmiermittelabgabebetätigungsglied (22) außen an der Anordnung befestigt ist, die zum Pumpen des Schmiermittels betätigt wird, und/oder (sic)

6. Ausschneidwerkzeug für Glasscheiben nach einem oder mehreren der vorhergehenden Ansprüche mit einem Blatt (7), das einen Schneidabschnitt (7a) aufweist und einen Befestigungsabschnitt (7b) aufweist, der sich im Wesentlichen quer zum Schneidabschnitt erstreckt.

7. Verfahren zum Entfernen einer Fahrzeugglasscheibe unter Benutzung eines manuell zu betätigenden Ausschneidwerkzeuges für Glasscheiben, wobei das Werkzeug einen länglichen vorderen Blattträger (2), der eine vordere Handhabe für die Vorrichtung bildet, eine längliche hintere Handhabe (3), die von dem vorderen Blattträger im Abstand angeordnet ist, sowie einen Brückenabschnitt (4) aufweist, der den vorderen Blattträger und die hintere Handhabe, die beide vom Brückenabschnitt ausgeht, miteinander verbindet, und wobei die Vorrichtung eine drehbare Aufhängung (27, 28) enthält, die ein Verdrehen des Blattträgers gegenüber der hinteren Handhabe um eine Drehachse zulässt, die in Längsrichtung des Blattträgers (2) ausgerichtet ist, um die Vorrichtung neu zu konfigurieren.

## Revendications

1. Outil de découpage de vitre (1) pour une utilisation pour retirer des vitres de véhicule, l'outil comprenant un support de lame avant (2) allongé fournissant une poignée avant pour l'outil, et une poignée arrière (3) allongée espacée du support de lame avant et une partie en pont (4), reliant le support de lame avant et la poignée arrière qui sont rattachées tous deux à la partie en pont, l'outil comprenant un montage rotatif (27, 28) permettant la rotation du support de lame par rapport à la poignée arrière autour d'un axe de rotation orienté dans la direction longitudinale du support de lame (2), afin de reconfigurer l'outil.

2. Outil de découpage de vitre selon la revendication 1, dans lequel :
i) la poignée arrière (3) et le support de lame avant (2) sont verrouillables l'un par rapport à l'autre, permettant de positionner l'outil dans des orientations reconfigurées ; et/ou
ii) la poignée arrière (3) est déplaçable planétairement autour du support de lame avant (2) ; et/ ou
iii) la poignée arrière (3) est déplaçable selon un arc autour du support de lame avant (2) ; et/ou
iv) la poignée arrière (3) est déplaçable sensiblement sur 90° ou plus autour du support de lame avant (2) ; et/ ou
v) la poignée arrière (3) est déplaçable sensiblement sur 180° ou plus autour du support de lame avant (2) ; et/ ou
vi) la poignée arrière (3) est déplaçable sensiblement sur 270° ou plus autour du support de lame avant (2) ; et/ou
vii) la poignée arrière (3) est déplaçable sensiblement sur 360° autour du support de lame avant (2) ; et/ou
viii) la poignée arrière (3) est agencée pour être verrouillée dans une pluralité d'orientations par rapport au support de lame avant (2).

3. Outil de découpage de vitre selon l'une quelconque des revendications précédentes, dans lequel :
i) le montage rotatif (27, 28) est prévu au niveau du support de lame pour le montage de la poignée arrière (3) de manière rotative par rapport au support de lame (2) ; et/ou
ii) le support de lame comprend une partie de surface externe fournissant une poignée avant ; et/ou
iii) la partie en pont (4) est agencée pour se déplacer à l'unisson avec la poignée arrière (3) autour du support de lame (2) ; et/ou
iv) l'axe de la poignée arrière (3), le support de lame et la partie en pont (4) sont sensiblement dans le même plan ; et/ou
v) la poignée arrière (3) et le support de lame (2) sont sensiblement parallèles l'une à l'autre ; et/ou
vi) un agencement d'ajustement de lame (15, 16, 17) est prévu permettant l'ajustement de la position de la lame (7) par rapport au support de lame, dans lequel :
a) l'agencement d'ajustement de lame est ajustable au moyen d'un actionneur (15) prévu sur l'extérieur de l'outil ; et/ ou
b) l'agencement d'ajustement de lame est actionnable pour faire varier de manière sélective la distance de projection de la lame (7) à partir du support de lame (2) ; et/ ou
c) l'agencement d'ajustement de lame comprend un mécanisme à cliquet (17) pour faire avancer et/ou rétracter la lame (7) par rapport au support de lame (2) ; et/ ou
vii) le support de lame (20) comprend un évidement de réception interne pour recevoir la lame.

4. Outil de découpage de vitre selon l'une quelconque des revendications précédentes, dans lequel :
i) un élément de retenue de lame est prévu pour fixer la lame avec le support de lame, l'élément de retenue de lame étant sollicité élastiquement vers la position de retenue ; et/ ou
ii) des moyens de mise en prise (12) sont prévus pour venir en prise avec un substrat à un niveau espacé de la partie terminale de la lame ;
iii) la lame (7) comprend une partie de montage allongée (7b) pour son montage sur le support de lame et une partie de coupe (7a) s'étendant transversalement à la partie de montage ; et/ ou
iv) la partie de coupe (7a) de la lame s'étend transversalement au plan dans lequel le support de lame (2) et la poignée arrière (3) se trouvent.

5. Outil de découpage de vitre selon l'une quelconque des revendications précédentes, dans lequel l'outil comprend un agencement de lubrification (20, 23, 24) pour délivrer un lubrifiant à la lame,
i) dans lequel l'agencement de lubrification comprend un réservoir de lubrifiant (20) ; et/ou
ii) comprenant des moyens de distribution (25) pour distribuer le lubrifiant par l'intermédiaire du support de lame (2) à la lame (7) ; et/ou
iii) dans lequel les moyens de distribution de lubrifiant comprennent un conduit (24) traversant la partie en pont (4); et/ ou
iv) dans lequel un injecteur ou buse de lubrifiant (25) est prévu pour le support de lame (2) agencé pour distribuer le lubrifiant à la région de la lame (7) ; et/ou
v) dans lequel un actionneur de distribution de lubrifiant (22) est monté sur l'extérieur du dispositif, qui agit pour pomper le fluide de lubrification.

6. Outil de découpage de vitre selon l'une quelconque des revendications précédentes, comprenant une lame (7) comportant une partie de coupe (7a) et une partie de montage (7b) s'étendant sensiblement transversalement à la partie de coupe.

7. Procédé pour retirer une vitre de véhicule en utilisant un outil de découpage de vitre actionnable manuellement, l'outil comprenant un support de lame avant allongé (2) fournissant une poignée avant pour le dispositif, et une poignée arrière allongée (3) espacée du support de lame avant et une partie en pont (4), reliant le support de lame avant et la poignée arrière qui sont rattachés tous deux à la partie en pont, le dispositif comprenant un montage rotatif (27, 28) permettant la rotation du support de lame par rapport à la poignée arrière autour d'un axe de rotation orienté dans la direction longitudinale du support de lame (2), afin de reconfigurer le dispositif.
